(19) Europäisches Patentamt / European Patent Office / Office européen des brevets

(11) **EP 4 651 589 A1**

(12) **EUROPEAN PATENT APPLICATION**
published in accordance with Art. 153(4) EPC

(43) Date of publication:
**19.11.2025 Bulletin 2025/47**

(21) Application number: **23931291.1**

(22) Date of filing: **04.04.2023**

(51) International Patent Classification (IPC):
**H04W 72/02** (2009.01)

(52) Cooperative Patent Classification (CPC):
**H04W 72/02; H04W 72/0446; H04W 72/0453;
H04W 74/0808**

(86) International application number:
**PCT/CN2023/086272**

(87) International publication number:
**WO 2024/207218 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **DING, Yi**
**Dongguan, Guangdong 523860 (CN)**
• **ZHAO, Zhenshan**
**Dongguan, Guangdong 523860 (CN)**
• **MA, Teng**
**Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **RESOURCE SET DETERMINATION METHOD AND APPARATUS, DEVICE, AND STORAGE MEDIUM**

(57)    A resource set determination method and apparatus, a device, and a storage medium, relating to the technical field of communications. The method comprises: a terminal device determines a resource set, wherein the resource set does not comprise a candidate resource satisfying a first condition, and the first condition is related to a guard band (810). By means of the method, it can be realized that the determined resource set does not comprise a resource on the edge of the guard band that cannot be used for transmission, so that when the terminal device selects a transmission resource from the resource set, selection of the resource on the edge of the guard band that cannot be used for transmission can be avoided, thereby avoiding transmission failure.

> Determining, by a terminal device, a resource set, wherein the resource set does not include a candidate resource satisfying a first condition, wherein the first condition is associated with a guard frequency band — 810

FIG. 8

**Description**

**TECHNICAL FIELD**

Embodiments of the present disclosure relate to the technical field of communications, and in particular, relate to a method and apparatus for determining a resource set, and a device and a storage medium thereof.

**RELATED ART**

In sidelink (SL) communication, a terminal device may select a transmission resource from a resource pool by sensing. Specifically, the terminal device initializes the resource set, excludes some resources in the resource set based on an unmonitored slot and/or a sensing result, and selects the transmission resource from the resource set with the resources excluded.

With evolution of technologies, how the terminal device determines the resource set needs to be further studied.

**SUMMARY**

Embodiments of the present disclosure provide a method and apparatus for determining a resource set, and a device and a storage medium thereof. The technical solutions are as follows.

According to an aspect of the embodiments of the present disclosure, a method for determining a resource set is provided. The method is applicable to a terminal device, and the method includes:
determining a resource set, wherein the resource set does not include a candidate resource satisfying a first condition, wherein the first condition is associated with a guard frequency band.

According to an aspect of the embodiments of the present disclosure, an apparatus for determining a resource set is provided. The apparatus includes:
a processing module, configured to determine a resource set, wherein the resource set does not include a candidate resource satisfying a first condition, wherein the first condition is associated with a guard frequency band.

According to an aspect of the embodiments of the present disclosure, a terminal device is provided. The terminal device includes a processor and a memory storing one or more computer programs, which when run by the processor, cause the processor to perform the method for determining the resource set as described above.

According to an aspect of the embodiments of the present disclosure, a computer-readable storage medium is provided. The computer-readable storage medium stores one or more computer programs, which when run by the processor, cause the processor to perform the method for determining the resource set as described above.

According to an aspect of the embodiments of the present disclosure, a chip is provided. The chip includes one or more programmable logic circuits and/or one or more program instructions, wherein the chip, when running, is caused to perform the method for determining the resource set as described above.

According to an aspect of the embodiments of the present disclosure, a computer program product is provided. The computer program product includes one or more computer instructions stored in a computer-readable storage medium, wherein the one or more computer instructions, when read from the computer-readable storage medium and executed by a processor, cause the processor to perform the method for determining the resource set as described above.

The technical solutions according to the embodiments of the present disclosure include the following beneficial effects.

The resource set determined by the terminal device does not include the candidate resource satisfying the first condition, and the first condition is associated with the guard frequency band, such that the determined resource set does not include a resource that may not be used for transmission at an edge of the guard frequency band. As such, in a case where the terminal device selects a transmission resource from the resource set, the terminal device avoids selecting the resource that cannot be used for transmission at the edge of the guard frequency band to avoid transmission failure.

**BRIEF DESCRIPTION OF THE DRAWINGS**

FIG. 1 is a schematic diagram of a network architecture according to some embodiments of the present disclosure;
FIG. 2 is a schematic diagram of a physical layer structure of SL communication according to some embodiments of the present disclosure;
FIG. 3 is a schematic diagram of time-frequency resource position reservation according to some embodiments of the present disclosure;
FIG. 4 is a schematic diagram of resource sensing and resource selection according to some embodiments of the present disclosure;

FIG. 5 is a schematic diagram of an interlaced resource block (IRB) according to some embodiments of the present disclosure;

FIG. 6 is a schematic diagram of division of a resource block set according to some embodiments of the present disclosure;

FIG. 7 is a schematic diagram of a resource block set and a guard frequency band according to some embodiments of the present disclosure;

FIG. 8 is a flowchart of a method for determining a resource set according to some embodiments of the present disclosure;

FIG. 9 is a schematic diagram of a resource selection window and a resource sensing window according to some embodiments of the present disclosure;

FIG. 10 is a schematic diagram of determining a resource in a single slot transmission scenario according to some embodiments of the present disclosure;

FIG. 11 is a schematic diagram of determining a resource in a multi-consecutive slots transmission (MCSt) scenario according to some embodiments of the present disclosure;

FIG. 12 is a block diagram of an apparatus for determining a resource set according to some embodiments of the present disclosure; and

FIG. 13 is a schematic structural diagram of a terminal device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are intended to describe the technical solutions according to the embodiments of the present disclosure more clearly, but do not constitute any limitation on the technical solutions according to the embodiments of the present disclosure. Those of ordinary skilled in the art understand that, with the evolution of the network architecture and the emergence of new service scenarios, the technical solutions according to the embodiments of the present disclosure are also applicable to similar technical problems.

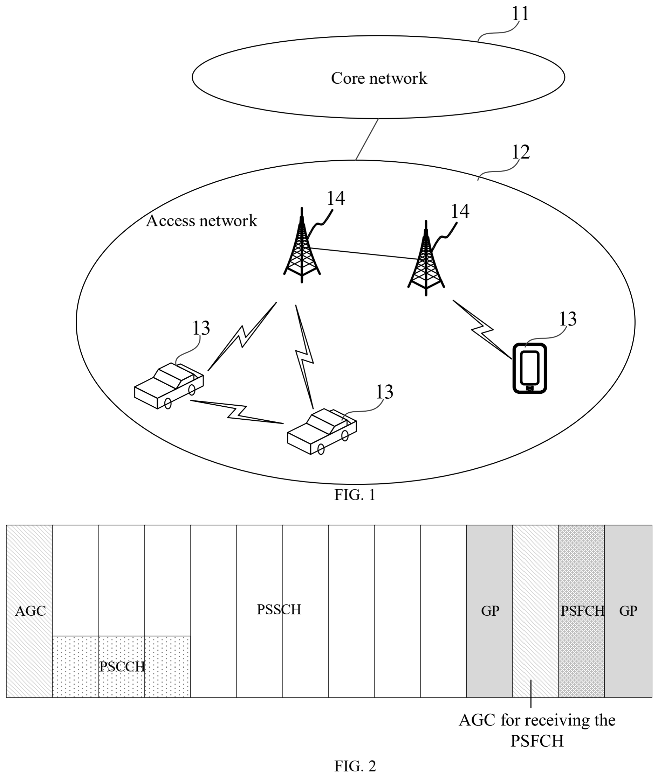

Referring to FIG. 1, a schematic diagram of a network architecture according to some embodiments of the present disclosure is illustrated. The network architecture includes: a core network 11, an access network 12, and terminal devices 13.

The core network 11 includes a plurality of core network devices. The core network devices mainly function to provide user connection, user management, and service bearing, and serve as a bearer network to provide an interface to an external network. For example, the core network of a 5th generation mobile communication (5G) new radio (NR) system includes devices such as an access and mobility management function (AMF) entity, a user plane function (UPF) entity, and a session management function (SMF) entity.

The access network 12 includes a plurality of access network devices 14. The access network in the 5G NR system may be referred to as a new generation-radio access network (NG-RAN). The access network devices 14 refer to apparatuses deployed in the access network 12 to provide wireless communication functionality for the terminal devices 13. The access network device 14 includes various forms of macro base stations, micro base stations, relay stations, access points, and the like. The name of the device with functionality of an access network device varies in systems employing different radio access technologies. For example, the device is referred to as a gNodeB or a gNB in the 5G NR system. With the evolution of communication technologies, the name "access network device" may change. For the convenience of description, the above apparatuses providing the wireless communication functionality for the terminal devices 13 are collectively referred to as the access network device in the embodiments of the present disclosure.

Typically, a plurality of terminal devices 13 are provided, and one or more terminal devices 13 may be arranged in a cell managed by each of the access network devices 14. The terminal devices 13 may include various handheld devices, in-vehicle devices, wearable devices, computing devices, other processing devices connected to a radio modem with the wireless communication functionality, various forms of user equipments (UEs), mobile stations (MS), and the like. For convenience of description, the devices described above are collectively referred to as the terminal devices. The access network devices 14 communicate with the core network devices using an air interface technology, such as an NG interface in the 5G NR system. The access network devices 14 communicate with the terminal devices 13 using an air interface technology, such as a Uu interface. The "terminal device" in the embodiments of the present disclosure is also referred to as the UE, which have the same meaning.

The terminal devices 13 (for example, the in-vehicle device and another device, such as another in-vehicle device, a mobile phone, or a road side unit (RSU)) may communicate with each other over a direct communication interface (for example, a PC5 interface). Accordingly, the communication link established based on the direct communication interface may be referred to as a direct link or an SL. The SL transmission means that data transmission is directly carried out between the terminal devices over an SL, which is different from a conventional cellular system in which the communication data is received or transmitted by the access network device. The SL transmission has characteristics of short delay and low overhead, and is therefore suitable for communication between two terminal devices that are geographically close to each other (such as an in-vehicle device and another peripheral device that is geographically close to the in-vehicle device). It should be noted that, in FIG. 1, only vehicle-to-vehicle communication in a vehicle-to-everything (V2X) scenario is illustrated, while the SL communication is applicable to various scenarios where terminal devices directly communicate with each other. In other words, the terminal device in the present disclosure refers to any device that communicates with another device over the SL.

The "5G NR system" in the embodiments of the present disclosure may also be referred to as a 5G system or an NR system, but those skilled in the art can understand the meaning thereof. The technical solutions according to the embodiments of the present disclosure are applicable to the 5G NR system, and also to evolved systems of the 5G NR system.

Before description of the technical solutions of the present disclosure, some background technical knowledge involved in the present disclosure is first explained. The following related technologies may be combined with the technical solutions according to the embodiments of the present disclosure in any manner, all of which fall within the scope of protection of the embodiments of the present disclosure. The embodiments of the present disclosure include at least some of the following content.

1. SL Transmission

Regarding the SL transmission, 3GPP has defined two transmission modes: a mode A and a mode B.

In the mode A, transmission resources of the terminal device are allocated by an access network device (such as a base station). The terminal device transmits communication data over the sidelink based on the transmission resources allocated by the access network device. The access network device may allocate transmission resources to the terminal device for single transmission, or allocate transmission resources to the terminal device for semi-static transmission.

In the mode B, the terminal device selects transmission resources from a resource pool autonomously for the transmission of communication data. Specifically, the terminal device may select transmission resources from the resource pool either by sensing or by random selection.

Next, SL communication in NR V2X systems where the terminal device autonomously selects resources (i.e., the mode B described above) is mainly described.

2. NR V2X Physical Layer Structure

A physical layer structure of SL communication in the NR V2X system is shown in FIG. 2. The first symbol in the slot shown in FIG. 2 is an automatic gain control (AGC) symbol. In a case where an SL UE receives data, a receive power is adjusted to a power suitable for demodulation in the symbol. In a case where the SL UE transmits data, content of a next symbol of the symbol is repeatedly transmitted on the AGC symbol. In FIG. 2, a physical sidelink control channel (PSCCH) is configured to bear first-stage sidelink control information, and a physical sidelink shared channel (PSSCH) is configured to bear data and second-stage sidelink control information. The PSCCH and the PSSCH are transmitted in the same slot. The first sidelink control information and the second sidelink control information may be two pieces of sidelink control information having different functions. For example, the first sidelink control information is carried in the PSCCH and mainly includes fields related to resource sensing, thereby facilitating other terminal devices to perform resource exclusion and resource selection upon decoding. In the PSSCH, the second sidelink control information is further carried in addition to data, and mainly includes fields related to data demodulation, thereby facilitating other terminal devices to demodulate the data in the PSSCH. A slot may include a symbol corresponding to a physical sidelink feedback channel (PSFCH). The PSFCH is configured to transmit hybrid automatic repeat request (HARQ) feedback information. Depending on configuration of the resource pool, the symbol corresponding to the PSFCH occurs once every one, two, and four slots. In a case where a slot does not include the symbol corresponding to the PSFCH, for example, a guard period (GP) (that is, a GAP) symbol between the PSSCH and the PSFCH, the AGC for receiving the PSFCH, and a PSFCH symbol in FIG. 2 are all configured to carry the PSSCH. In general, a last symbol in the slot is the GP symbol, that is, GAP. Alternatively, a symbol subsequent to the last symbol carrying the PSSCH or the PSFCH is the GP symbol. The SL UE performs reception- transmission conversion within the GP symbol, but does not transmit data. In a case where a slot includes a PSFCH resource, a GP symbol is present between the PSSCH and the PSFCH symbols. This is because the UE transmits data over the PSSCH and receives data over the PSFCH, and the GP symbols is required for reception-transmission conversion.

3. Resource Reservation in NR V2X

In the NR V2X system, in the mode B, the terminal device selects transmission resources autonomously for data transmission. Resource reservation is a prerequisite for resource selection.

The resource reservation means that the terminal device transmits the first sidelink control information in the PSCCH to reserve resources to be used. The NR V2X system supports both intra-transport block (TB) resource reservation and inter-TB resource reservation.

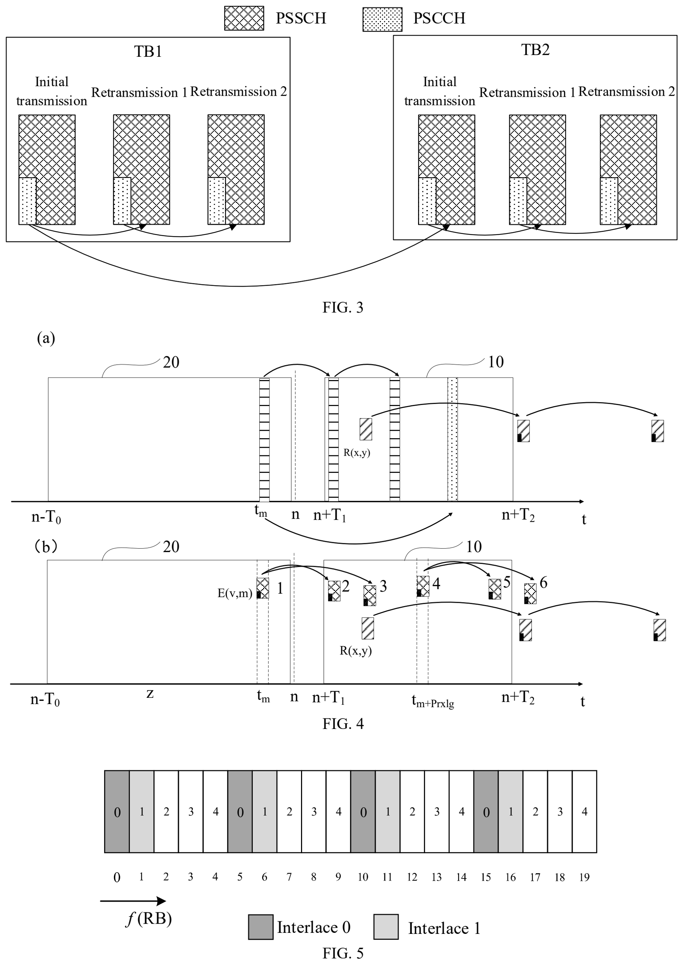

As shown in FIG. 3, the terminal device transmits the first sidelink control information, and indicates N time-frequency resources (including a resource for current data transmission) of a current TB by using the Time Resource Assignment and Frequency Resource Assignment fields in the first sidelink control information. $N \leq N_{max}$, and $N_{max}$ is equal to 2 or 3 in NR V2X. Meanwhile, the N indicated time-frequency resources should be arranged in W slots. W is equal to 32 in NR V2X. In the TB1 shown in FIG. 3, the terminal device transmits the first sidelink control information in the PSCCH while transmitting initial transmission data in the PSSCH, and indicates time-frequency resource positions for initial transmission and retransmission 1 (i.e., N=2) using the two fields described above. That is, a time-frequency resource for retransmission 1 is reserved. Moreover, initial transmission and retransmission 1 are arranged and carried out across 32 slots in a time domain. Similarly, in the TB1 shown in FIG. 3, the terminal device indicates time-frequency resource positions for retransmission 1 and retransmission 2 using the first sidelink control information transmitted in the PSCCH of retransmission 1, and retransmission 1 and retransmission 2 are arranged and carried out across 32 slots in the time domain.

Besides, in transmitting the first sidelink control information, the terminal device performs the inter-TB resource reservation using a Resource Reservation Period field. For example, in FIG. 3, in transmitting the first sidelink control information of initial transmission of the TB1, the terminal device indicates time-frequency resource positions for initial transmission and retransmission 1 of the TB1 using the Time Resource Assignment and Frequency Resource Assignment fields, which are denoted as $\{(t_1, f_1), (t_2, f_2)\}$. $t_1$ and $t_2$ represent the time domain positions of initial transmission and retransmission 1 resources of the TB1, and $f_1$ and $f_2$ represent the corresponding frequency domain positions. In a case where a value of the Resource Reservation Period field in the first sidelink control information is 100 ms, the sidelink control information (SCI) simultaneously indicates the time-frequency resources $\{(t_1+100, f_1), (t_2+100, f_2)\}$. The two resources are used for the initial transmission and the retransmission 1 of TB2. Similarly, the first sidelink control information transmitted in retransmission 1 of the TB1 also reserves time-frequency resources for retransmission 1 and retransmission 2 of the TB2 using the Resource Reservation Period field. In NR V2X, possible values for the Resource Reservation Period field are 0, 1-99, 100, 200, 300, 400, 500, 600, 700, 800, 900, and 1000 ms, offering greater flexibility compared to LTE V2X. However, only e values are configured in each resource pool, and the terminal device determines a possible value to be used based on the used resource pool. The e values in the resource pool configuration are denoted as a resource reservation period set M, and exemplarily, e is less than or equal to 16.

In addition, the inter-TB reservation may be activated or deactivated on a resource pool basis by means of network configuration or pre-configuration. In a case where the inter-TB reservation is activated, the first sidelink control information includes the Resource Reservation Period field. In a case where the inter-TB reservation is deactivated, the first sidelink control information does not include the Resource Reservation Period field. In a case where the inter-TB reservation is activated, the value of the Resource Reservation Period field used by the terminal device, i.e., the resource reservation period, is generally not changed prior to trigger of resource reselection. The terminal device reserves resources for a next period using the Resource Reservation Period field in the first sidelink control information for transmission of another TB each time the terminal device transmits the first sidelink control information, such that periodic semi-persistent transmission is achieved.

In a case where the terminal device operates in the mode B, the terminal device acquires, by sensing the PSCCHs from another terminal device, the first sidelink control information transmitted by the another terminal device to acknowledge the resources reserved by another terminal device. In resource selection, the terminal device excludes the resources reserved by the another terminal device to avoid resource collision.

4. Resource Selection Method for NR V2X Sensing

In the NR V2X system, the terminal device needs to select resources autonomously in the mode B.

As shown in FIG. 4, the terminal device triggers resource selection or reselection in a slot n, or the slot n is a slot where a higher layer triggers a physical layer to report a candidate resource set. A resource selection window 10 starts from $n+T1$ and ends at $n+T_2$. $0 \leq T_1 \leq T_{proc,1}$, and $T_{proc,1}$ represents 3, 5, 9, or 17 slots in a case where the subcarrier spacing is 15, 30, 60, or 120 kHz. $T_{2min} \leq T_2 \leq$ a remaining delay budget of services, and a value set of $T_{2min}$ is $\{1, 5, 10, 20\}*2^\mu$ slots. $\mu=0, 1, 2,$ or 3, which correspond to the subcarrier spacing being 15, 30, 60, or 120 kHz respectively. The terminal device determines $T_{2min}$ from the value set based on a priority of its own to-be-transmitted data. For example, in a case where the subcarrier spacing is 15 kHz, the terminal device determines $T_{2min}$ from the set $\{1, 5, 10, 20\}$ based on the priority of its own to-be-transmitted data. In a case where $T_{2min}$ is greater than or equal to the remaining delay budget of service, $T_2$ is equal to the remaining delay budget of service. The remaining delay budget means a difference between a corresponding time of a delay requirement of the data and a current time. For example, for a packet arriving in the slot n, the delay requirement is 50 ms. Assuming that one slot is 1 ms, then the remaining delay budget is 50 ms in a case where the current time is the slot n, and the remaining delay budget is 30 ms in a case where the current time is a slot n+20.

The terminal device senses resources from $n-T_0$ to $n-T_{proc,0}$ (excluding $n-T_{proc,0}$), and a value of $T_0$ is 100 or 1100 ms. In a case where the subcarrier spacing is 15, 30, 60, or 120 kHz, $T_{proc,0}$ represents 1, 1, 2, or 4 slots. In some embodiments, the terminal device senses resources in a slot that is within a resource pool used by the terminal device within a resource sensing window. In some embodiments, the terminal device senses the first sidelink control information transmitted by another terminal device in each slot (except for its own transmission slot), and the terminal device uses the results of resource sensing in $n-T_0$ to $n-T_{proc,0}$ upon trigger of resource selection or reselection in the slot n.

In step 1, the terminal device determines all available resources within the resource pool used by the terminal device in the resource selection window 10 as a resource set A, and any of the resources in the set A is denoted as the resource R(x, y). x and y respectively represent a frequency domain position and a time domain position of the resource. An initial number of the resources in the set A is denoted as $M_{total}$. The terminal device excludes resources in the resource set A based on an unmonitored slot in the resource sensing window 20 (step 1-1) and/or resource sensing results in the resource sensing window 20 (step 1-2). The terminal device determines whether the resource R(x, y) or a series of periodic resources corresponding to the resource R(x, y) are overlapped with a slot determined based on the unmonitored slot in step 1-1 or a resource determined based on the sensed first sidelink control information in step 1-2, and excludes the resource R(x, y) from the resource set A in a case where these resources are overlapped with each other.

In step 1-1, in a case where the terminal device transmits data in the slot $t_m$ within the resource sensing window 20 but does not carry out sensing, the terminal device determines corresponding Q slots based on the slot $t_m$ and each allowed resource reservation period in the resource pool used by the terminal device, with the resource reservation period as an interval. In a case where the Q slots are overlapped with the resource R(x, y) or the series of periodic resources corresponding to the resource R(x, y), the resource R(x, y) is excluded from the resource set A. Q=1 or $Q = \lceil T_{scal}/P_{rx} \rceil$ (for rounding up). $T_{scal}$ is equal to a value of $T_2$ converted into milliseconds. $P_{rx}$ represents one of the resource reservation periods allowed by the resource pool used by the terminal device. In some embodiments, a series of periodic resources corresponding to the resource R(x, y) are R(x, $y+j*P_{txlg}$), j=0,1,2,$\cdots$,$C_{resel-1}$. $C_{resel}$ is related to a random count value generated by the terminal device, and $P_{txlg}$ represents the number of logical slots converted from $P_{tx}$. $P_{tx}$ represents the resource reservation period of the terminal device. For example, the case that $C_{resel}$ is equal to 3 in FIG. 4(a) means three periodic resources corresponding to the resource R(x, y) (including the resource R(x, y)).

For example, in FIG. 4(a), the terminal device does not carry out sensing in the slot $t_m$, but performs resource exclusion in sequence based on each resource reservation period in the resource reservation period set M in the used resource pool configuration. For a resource reservation period 1, assuming that the Q value is calculated as 2, then the corresponding Q slots are two subsequent slots mapped from the slot $t_m$ in FIG. 4(a) as indicated by a horizontal line shadow, with the resource reservation period 1 as an interval. For a resource reservation period 2, assuming that the Q value is calculated as 1, then the corresponding Q slots are one subsequent slot mapped from the slot $t_m$ in FIG. 4(a) as indicated by a dotted shadow, having the resource reservation period 2 as an interval.

The terminal device determines whether Q slots corresponding to each reservation period are overlapped with the resource R(x, y) or a series of periodic resources corresponding to the resource R(x, y), and excludes the resource R(x, y) from the resource set A in a case where these resources are overlapped with each other.

In some embodiments, in a case where the inter-TB reservation is deactivated for the resource pool used by the terminal device, the terminal device does not perform step 1-1.

In some embodiments, upon completion of step 1-1, in a case where the number of remaining resources in the resource set A is less than $M_{total}*X$, the resource set A is initialized into all available resources within the resource pool used by the terminal device in the resource selection window 10, and then step 1-2 is performed.

In step 1-2, in a case where the terminal device senses the first sidelink control information transmitted in the PSCCH within the slot $t_m$ of the resource sensing window 20, a sidelink reference signal received power (SL-RSRP) of the PSCCH or an SL-RSRP of the PSSCH scheduled by the PSCCH (that is, the SL-RSRP of the PSCCH transmitted in the same slot as the PSCCH) is measured.

In a case where the measured SL-RSRP is greater than an SL-RSRP threshold and the first sidelink control information received by the terminal device includes the Resource Reservation Period field, the terminal device determines the corresponding Q slots based on the slot $t_m$ and the resource reservation period carried in the sensed first sidelink control information, with the resource reservation period as an interval. The terminal device assumes that the first sidelink control information with the same content is received in the Q slots. The terminal device determines whether the resources indicated in the Time Resource Assignment and Frequency Resource Assignment fields of the first sidelink control information received in the slot $t_m$ and the Q pieces of the first sidelink control information assumed to be received are overlapped with the resource R(x, y) or a series of periodic resources corresponding to the resource R(x, y), and excludes the corresponding resource R(x, y) from the set A in a case where these resources are overlapped with each other. Q=1 or $Q=\lceil T_{scal}/P_{rx}\rceil$ (for rounding up). $T_{scal}$ is equal to a value of $T_2$ converted into milliseconds. $P_{rx}$ represents the resource reservation period carried in the sensed first sidelink control information. In some embodiments, a series of periodic resources corresponding to the resource R(x, y) are R(x, y+j*$P_{txlg}$), j=0, 1, 2,···, $C_{resel-1}$. $C_{resel}$ is related to a random count value generated by the terminal device, and $P_{txlg}$ represents the number of logical slots converted from $P_{txx}$. $P_{tx}$ represents the resource reservation period of the terminal device. for example, the case that the $C_{resel}$ is equal to 3 in FIG. 4(b) means three periodic resources corresponding to the resource R(x, y) (including the resource R(x, y)).

For example, in FIG. 4(b), in a case where the first sidelink control information received by the terminal device includes the Resource Reservation Period field, the terminal device senses the first sidelink control information in the PSCCH in the slot tm resource E(v, m), having the resource reservation period in the field being $P_{rx}$. Assuming that the Q value is calculated as 1, then the terminal device assumes that the first sidelink control information with the same content is also received in the slot $t_{m+Prxlg}$. The terminal device determines whether the resources 1, 2, 3, 4, 5, and 6 indicated in the Time Resource Assignment and Frequency Resource Assignment fields of the first sidelink control information received in the slot $t_m$ and the first sidelink control information assumed to be received in the slot $t_{m+Prxlg}$ are overlapped with the resource R(x, y) or a series of periodic resources corresponding to the resource R(x, y), and excludes the resource R(x, y) from the resource set A in a case where these resources are overlapped with each other and the RSRP condition is met.

In a case where the SL-RSRP measured by the terminal device is greater than the SL-RSRP threshold and the first sidelink control information received by the terminal device does not include the Resource Reservation Period field, the terminal device only determines whether the resource indicated in the Time Resource Assignment and Frequency Resource Assignment fields of the first sidelink control information received in the slot $t_m$ is overlapped with the resource R(x, y) or a series of resources corresponding to the resource R(x, y), and excludes the resource R(x, y) from the resource set A in a case where these resources are overlapped with each other.

For example, in FIG. 4(b), in a case where the first sidelink control information received by the terminal device does not include the Resource Reservation Period field, and the terminal device senses the first sidelink control information in the PSCCH in the slot tm resource E(v, m), the terminal device determines whether the resources 1, 2, and 3 indicated in the Time Resource Assignment and Frequency Resource Assignment fields in the first sidelink control information are overlapped with the resource R(x, y) or a series of periodic resources corresponding to the resource R(x, y), and excludes the resource R(x, y) from the resource set A in a case where these resources are overlapped with each other and the RSRP condition is met.

In a case where the number of the remaining resources in the resource set A upon the resource exclusion is less than $M_{total}$*X, the SL-RSRP threshold is raised by 3 dB, and step 1 is performed again. The physical layer reports the resource set A upon resource exclusion to a higher layer as a candidate resource set.

In step 2, the higher layer randomly selects resources from the reported candidate resource set for data transmission. That is, the terminal device randomly selects resources from the candidate resource set for data transmission.

It should be noted that:

1. The RSRP threshold is determined based on the priority P1 carried in the PSCCH sensed by the terminal device and the priority P2 of the data to be transmitted by the terminal device. The configuration of the resource pool used by the terminal device includes an SL-RSRP threshold table, and the SL-RSRP threshold table includes SL-RSRP thresholds corresponding to all priority combinations. The resource pool may be configured on the network or preconfigured.

For example, as listed in Table 1, it is assumed that the selectable values of the priority levels of both P1 and P2 are 0 to 7, the SL-RSRP thresholds corresponding to different priority combinations are represented by $\gamma_{ij}$. In $\gamma_{ij}$, i is a value of the priority level P1, and j is a value of the priority level P2.

Table 1: SL-RSRP threshold table

| P2<br>P1 | 0 | 1 | 2 | 3 | 4 | 5 | 6 | 7 |
|---|---|---|---|---|---|---|---|---|
| 0 | $\gamma_{00}$ | $\gamma_{01}$ | $\gamma_{02}$ | $\gamma_{03}$ | $\gamma_{04}$ | $\gamma_{05}$ | $\gamma_{06}$ | $\gamma_{07}$ |
| 1 | $\gamma_{10}$ | $\gamma_{11}$ | $\gamma_{12}$ | $\gamma_{13}$ | $\gamma_{14}$ | $\gamma_{15}$ | $\gamma_{16}$ | $\gamma_{17}$ |
| 2 | $\gamma_{20}$ | $\gamma_{21}$ | $\gamma_{22}$ | $\gamma_{23}$ | $\gamma_{24}$ | $\gamma_{25}$ | $\gamma_{26}$ | $\gamma_{27}$ |
| 3 | $\gamma_{30}$ | $\gamma_{31}$ | $\gamma_{32}$ | $\gamma_{33}$ | $\gamma_{34}$ | $\gamma_{35}$ | $\gamma_{36}$ | $\gamma_{37}$ |
| 4 | $\gamma_{40}$ | $\gamma_{41}$ | $\gamma_{42}$ | $\gamma_{43}$ | $\gamma_{44}$ | $\gamma_{45}$ | $\gamma_{46}$ | $\gamma_{47}$ |
| 5 | $\gamma_{50}$ | $\gamma_{51}$ | $\gamma_{52}$ | $\gamma_{53}$ | $\gamma_{54}$ | $\gamma_{55}$ | $\gamma_{56}$ | $\gamma_{57}$ |
| 6 | $\gamma_{60}$ | $\gamma_{61}$ | $\gamma_{62}$ | $\gamma_{63}$ | $\gamma_{64}$ | $\gamma_{65}$ | $\gamma_{66}$ | $\gamma_{67}$ |
| 7 | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ |

In a case where the terminal device senses the PSCCH transmitted by another terminal device, the terminal device acquires the priority P1 carried in the first sidelink control information transmitted in the PSCCH and the priority P2 of the to-be-transmitted data, and determines an SL-RSRP threshold by looking up in Table 1.

2. Whether the terminal device compares the measured PSCCH-RSRP or a PSSCH-RSRP scheduled by the PSCCH with the SL-RSRP threshold depends on the resource pool configuration of the resource pool used by the terminal device. The resource pool configuration may be configured on the network or preconfigured.

3. The value of X as described above is possibly {20%, 35%, 50%}. The configuration of the resource pool used by the terminal device includes correspondence between the priorities and the possible values described above, and the terminal device determines the value of X based on the priority of the to-be-transmitted data and the correspondence. The resource pool may be configured on the network or preconfigured.

4. The resource reservation period is converted into logical slots.

As mentioned above, the terminal device transmits the first sidelink control information to indicate time-frequency resources to reserve resources to be used next. In sensing, the terminal device for resource selection decodes the first sidelink control information transmitted by another terminal device to acquire resources reserved by the another terminal device, and then excludes the corresponding resources during resource selection to avoid resource collision. In resource exclusion, the terminal device for resource selection converts a physical time (for example, 100 ms) indicated in the Resource Reservation Period field in the decoded first sidelink control information into a corresponding number of logical slots, and then performs resource exclusion by using the number of the logical slots:

$$P'_{\text{rsvp}} = \left\lceil \frac{T'_{max}}{10240\ ms} \times P_{\text{rsvp}} \right\rceil$$

In the above formula, $P_{\text{rsvp}}$ represents a resource reservation period, for example, a resource reservation period indicated in the Resource Reservation Period in the first sidelink control information sensed by the terminal device, or a resource reservation period allowed in the resource pool, or a resource reservation period of the terminal device, and $P'_{\text{rsvp}}$ represents a corresponding calculated number of logical slots. $T'_{max}$ represents the number of slots within a resource pool or a transmission resource pool of the terminal device in a system frame number (SFN) period or in 10240 ms.

The above description is for the SL communication method in NR-V2X. That is, the terminal device autonomously selects transmission resources by resource sensing and autonomously performs data transmission on the sidelink. The SL communication method is applicable to various SL communications such as direct communication between handheld terminals and direct communication between pedestrians and vehicles.

5. Physical Layer Structure of Unlicensed SL (SL-U)

In a case where the NR SL technology operates in the unlicensed spectrum, regulatory requirements in relevant areas, such as occupied channel bandwidth (OCB) and power spectral density (PSD) requirements, need to be considered in the system design. For example, for unlicensed spectrum within the 5 GHz frequency range, European regulatory requirements include minimum OCB and maximum PSD requirements. For the OCB requirement, the occupied channel bandwidth should not be less than 80% of the total channel bandwidth in a case where the terminal device performs data transmission over the channel; and for SL-U, reference may be made to the IRB structure in NR-U to satisfy the OCB occupancy requirement.

One interlaced resource includes N discrete PRBs in the frequency domain, M interlaced resources are included in the frequency band range, and PRBs in an $m^{th}$ interlace are {m, M+m, 2M+m, 3M+m, ...}.

As shown in FIG. 5, the system bandwidth includes 20 PRBs (one PRB corresponds to 12 subcarriers) and five interlaces (that is, M=5). Each interlace includes four PRBs (that is, N=4). The frequency domain interval between any two adjacent PRBs in the interlace is uniform, that is, five PRBs. The numbers inside the boxes in FIG. 5 denote interlace indices. It should be noted that the PRB in the interlace is also referred to as an IRB, and the interlace is also referred to as the IRB.

In addition to the IRB structure, the resource block (RB) set is also introduced in the SL-U.

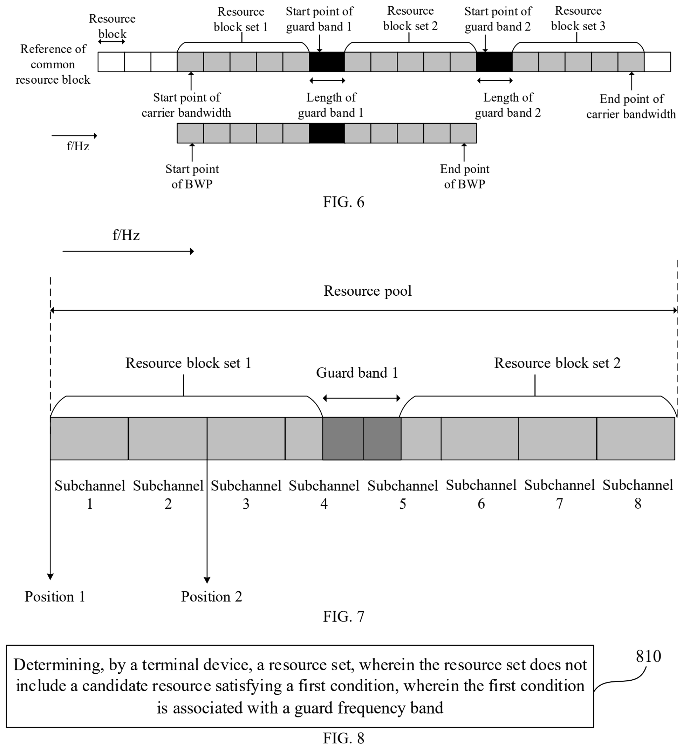

The frequency domain resources on the carrier are organized into a plurality of RB sets, and guard frequency bands (guard bands for short) are configured or not configured between the RB sets. For example, an RB set corresponds to a frequency domain width of 20 MHz. The communication device needs to perform listen before talk (LBT) on the unlicensed spectrum, and the data is transmitted upon success of the LBT. The LBT is performed based on the granularity of one RB set, and thus one RB set is also referred to as an LBT sub-band. In a case where the communication device transmits data on the RB set, the LBT needs to be performed on the corresponding RB set, and the data is transmitted upon success of the LBT. One RB set includes a plurality of IRBs. For simplicity, in FIG. 6, one resource block actually corresponds to one IRB in FIG. 5. In general, a bandwidth part (BWP) configured for the communication device includes an integer number of RB sets.

In addition to the IRB structure described above, the SL-U may still follow design of the subchannel and the resource pool, and continuously occupy a plurality of subchannels in the frequency domain, which is, for example, applicable to some areas where the regulations do not include the OCB requirement. Alternatively, for areas with the OCB requirement, the terminal device continuously occupies a sufficient number of subchannels to satisfy the OCB requirement. It should be noted that because the terminal device needs to perform the LBT on the unlicensed frequency band, the RB set needs to be introduced in this case. For example, the resource pool of the terminal device includes one or more RB sets.

For example, as shown in FIG. 7, the resource pool of the terminal device includes two RB sets, that is, a resource block set 1 and a resource block set 2, and a guard band (that is, the "guard band 1" in FIG. 7) is arranged between the resource block set 1 and the resource block set 2. Consistent with the existing SL technology, the resource pool of the terminal device includes a plurality of consecutive subchannels, that is, subchannels 1 to 8, and the terminal device occupies consecutive subchannels for data transmission. For example, in a case where transmission by the terminal device needs to occupy two subchannels, the subchannels 1 and 2, the subchannels 2 and 3, or the subchannels 3 and 4, and the like are occupied.

6. MCSt

Based on the above description, in the unlicensed spectrum, the communication device needs to perform the LBT first, and the channel is accessed only upon success of the LBT. In a case where the LBT of the communication device is successful and the channel is accessed, the time of occupying the channel is referred to as a channel occupancy time (COT). Within the COT, the communication device transmits data continuously or non-continuously. Therefore, the MCSt is introduced into the SL-U to fully utilize the COT initiated upon success of the LBT. That is, the communication device continuously transmits data in a plurality of slots to improve the utilization of the COT. Simultaneous and continuous use/occupancy of the channel also facilitates contention for the channel with another system. For example, in a case where the SL-U terminal adopts continuous transmission, wireless fidelity (Wi-Fi) users fail to successfully access the channel simultaneously due to continuous channel occupancy.

Based on the above description, the SL-U system still follows the design of the resource pool and the subchannel in the existing SL, and the terminal device occupies consecutive subchannels in the frequency domain in data transmission, that is, the example shown in FIG. 7. However, due to the resource block set and the guard frequency band, some sub-channel resources may not be used as transmission resources for the terminal device, which is mainly due to the constraints of the guard frequency band. The constraints of the guard frequency band means that the resources within the guard frequency band are used for data transmission only in a case where the terminal device transmits data on the RB sets adjacent to the guard frequency band.

Using an example of FIG. 7, in a case where the terminal device needs to occupy two subchannels for data transmission, for example, the subchannels 4 and 5, the resources within the guard frequency band are used for data transmission because the subchannel 4 contains the resources within the resource block set 1 and the subchannel 5 contains the resources within the resource block set 2, and using of the subchannels 4 and 5 means using of two RB sets.

However, in a case where the subchannels 3 and 4 are used, because the terminal device does not use the resource block set 2, the resources within the guard frequency band are not used for data transmission, and the terminal device only uses the resources within the subchannel 3 and the subchannel 4 other than the guard frequency band. Similarly, in a case where the terminal device uses the subchannels 5 and 6, the subchannel 6 and some of the resources in the subchannel 5 are used. In a case where the remaining resources within the subchannel 4 other than the guard frequency band are less, the sub-channels 3 and 4 are not used as transmission resources of the terminal device. Similarly, in a case where the remaining resources in the subchannel 5 other than the guard frequency band are less, the sub-channels 5 and 6 are not used as transmission resources of the terminal device.

Referring to FIG. 8, a flowchart of a method for determining a resource set according to some embodiments of the present disclosure is shown. The method is applicable to the network architecture shown in FIG. 1. For example, the method is applicable to a terminal device. The method includes the following processes.

In S810, a terminal device determines a resource set, wherein the resource set does not include a candidate resource satisfying a first condition, wherein the first condition is associated with a guard frequency band.

In some embodiments, the first condition includes at least one of the following conditions 1 to 4.

Condition 1: A frequency domain start position or a frequency domain end position of the candidate resource is within the guard frequency band.

Condition 2: The number of physical resource blocks (PRBs) other than the guard frequency band within a start subchannel of the candidate resource is less than or equal to a first threshold.

Condition 3: The candidate resource does not include a first subchannel, and a number of PRBs other than the guard frequency band within the first subchannel is greater than or equal to a second threshold.

Condition 4: The number of PRBs other than the guard frequency band within the candidate resource is less than or equal to a third threshold.

In some embodiments, the candidate resource corresponds to a subchannel or a plurality of consecutive subchannels in a frequency domain. That is, the candidate resource corresponds to one or more subchannels in the frequency domain. The frequency domain start position of the candidate resource is a frequency domain start position of a start subchannel of the candidate resource, and the frequency domain end position of the candidate resource is a frequency domain end position of an end subchannel of the candidate resource. The start subchannel of the candidate resource is a subchannel with a smallest index or a smallest frequency domain position in one or more subchannels corresponding to the candidate resource in the frequency domain, and the end subchannel of the candidate resource is a subchannel with a largest index or a largest frequency domain position in one or more subchannels corresponding to the candidate resource in the frequency domain. In some embodiments, an index of the candidate resource is associated with a frequency domain position of the candidate resource. For example, the smaller (or lower) index of the candidate resource means that the frequency domain position of the candidate resource is lower, and the larger (or higher) index of the candidate resource means that the frequency domain position of the candidate resource is higher.

As shown in FIG. 7, assuming that a candidate resource corresponds to two subchannels (including the subchannel 1 and the subchannel 2 shown in the drawing) in the frequency domain, then the subchannel 1 is the start subchannel of the candidate resource, the subchannel 2 is the end subchannel of the candidate resource, the frequency domain start position of the candidate resource is a frequency domain start position (that is, the frequency domain position shown in "position 1" in FIG. 7) of the subchannel 1, and the frequency domain end position of the candidate resource is a frequency domain end position (that is, the frequency domain position shown in "position 2" in FIG. 7) of the subchannel 2.

In some embodiments, the candidate resource corresponds to a time unit or a plurality of consecutive time units in a time domain. That is, the candidate resource corresponds to one or more time units in the time domain. In the present disclosure, the "time unit" is a slot, a subframe, or other time units, which is not limited in the present disclosure. For the "time unit" herein, reference may be made to the explanation, which is not repeated. Illustratively, the candidate resource corresponds to a slot in the time domain. Illustratively, the candidate resource corresponds to a plurality of consecutive slots in the time domain.

In some embodiments, for the condition 1, the frequency domain start position or the frequency domain end position of the candidate resource being within the guard frequency band means that the frequency domain start position or the frequency domain end position of the candidate resource is higher than or equal to a frequency domain start position of the guard frequency band, and is lower than or equal to a frequency domain end position of the guard frequency band. In the embodiments, in a case where the frequency domain start position or the frequency domain end position of the candidate resource is within a boundary (that is, the frequency domain start position or the frequency domain end position of the guard frequency band) of the guard frequency band, the frequency domain start position or the frequency domain end position of the candidate resource is also within the guard frequency band.

In some embodiments, for the condition 1, the frequency domain start position or the frequency domain end position of the candidate resource being within the guard frequency band means that the frequency domain start position or the frequency domain end position of the candidate resource is higher than a frequency domain start position of the guard frequency band, and is lower than a frequency domain end position of the guard frequency band. In the embodiments, in a case where the frequency domain start position or the frequency domain end position of the candidate resource is within a boundary (that is, the frequency domain start position or the frequency domain end position of the guard frequency band) of the guard frequency band, the frequency domain start position or the frequency domain end position of the candidate resource is not within the guard frequency band.

Illustratively, as shown in FIG. 7, assuming that a candidate resource corresponds to two subchannels (including the subchannel 1 and the subchannel 2 shown in FIG. 7) in the frequency domain, then the frequency domain end position of the candidate resource is within the guard frequency band as the frequency domain end position of the candidate resource is higher than the frequency domain start position of the guard frequency band (that is, the "guard band 1" in in FIG. 7), and is lower than the frequency domain end position of the guard frequency band.

In some embodiments, the condition 2 is replaced by a condition that the number of PRBs other than the guard frequency band within the start subchannel of the candidate resource is less than the first threshold.

In some embodiments, the condition 3 is replaced by a condition that the candidate resource does not include the first subchannel, and the number of PRBs other than the guard frequency band within the first subchannel is greater than the second threshold. In some embodiments, the condition 3 is replaced by a condition that a number of PRBs other than the guard frequency band within each subchannel in the candidate resource is less than or equal to the second threshold. In some embodiments, the condition 3 is replaced by a condition that a number of PRBs other than the guard frequency band within each subchannel in the candidate resource is less than the second threshold. In some embodiments, the condition 3 is replaced by a condition that the candidate resource does not include the first subchannel, and the first subchannel is a subchannel used for transmitting the PSCCH.

In some embodiments, the condition 4 is replaced by a condition that the number of PRBs within the candidate resource is less than a third threshold.

In some embodiments, at least one of the first threshold, the second threshold, or the third threshold is configured by a network device, is preconfigured, is determined based on implementation of the terminal device, or is a predetermined value specified in the standard. Illustratively, the first threshold or the second threshold is a number of PRBs occupied by the PSCCH in resource pool configuration.

In some embodiments, the terminal device determining the resource set includes: initializing the resource set to acquire an initialized resource set, wherein the initialized resource set includes remaining candidate resources other than the candidate resource satisfying the first condition within a resource selection window; and excluding candidate resources in the resource set based on an unmonitored time unit and/or a sensing result within a resource sensing window. In the embodiments, the resource set initialized by the terminal device does not include the candidate resource satisfying the first condition, such that the candidate resource satisfying the first condition is excluded in initializing the resource set, and the process of excluding resources based on the unmonitored time unit and/or the sensing result within a resource sensing window is the same as description of step 1-1 and step 1-2 in the part "Resource Selection Method for NR V2X Sensing ", which is not repeated herein.

In some embodiments, determining the resource set by the terminal device includes: initializing the resource set to acquire an initialized resource set, wherein the initialized resource set includes all candidate resources within a resource selection window; and excluding the candidate resource satisfying the first condition from the resource set, and excluding candidate resources in the resource set based on an unmonitored time unit and/or a sensing result within a resource sensing window. In the embodiments, the resource set initialized by the terminal device includes all candidate resources within the resource selection window, and thus the initialized resource set includes the candidate resource satisfying the first condition, and the candidate resource satisfying the first condition is excluded from the resource set, such that the acquired resource set does not include the candidate resource satisfying the first condition. In addition, the process of excluding resources based on the unmonitored time unit and/or the sensing result within a resource sensing window is the same as description of step 1-1 and step 1-2 in the part "Resource Selection Method for NR V2X Sensing ", which is not repeated herein.

In some embodiments, the terminal device includes a physical layer and a high layer. The high layer is a protocol layer above the physical layer. The physical layer is configured to determine the resource set and report the resource set to the high layer. The resource set does not include the candidate resource satisfying the first condition. The high layer is configured to select a transmission resource from the resource set. For example, the high layer randomly selects one or more candidate resources from the resource set reported by the physical layer as transmission resources.

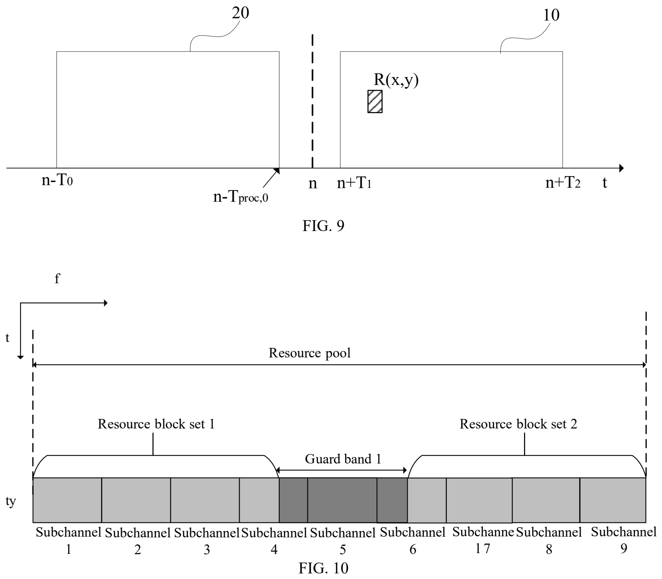

As shown in FIG. 9, the terminal device triggers resource selection or reselection in a slot n, or a time slot n is a slot that triggers the high layer to report the resource set to the physical layer. The resource selection window 10 starts from $n+T_1$ and ends at $n+T_2$. For description of $T_1$ and $T_2$, reference may be made to description described above.

The terminal device performs resource sensing from $n-T_0$ to $n-T_{proc,0}$ (excluding $n-T_{proc,0}$), that is, the resource sensing window 20 starts from $n-T0$ and ends at $n-T_{proc,0}$ (excluding $n-T_{proc,0}$). For description of $T_0$ and $T_{proc,0}$, reference may be made to description described above.

Any candidate resource within the resource selection window is denoted as R(x, y). x and y are used to indicate the frequency domain position and the time domain position of the resource respectively. For example, x indicates the subchannel at the frequency domain start position of the resource R(x, y), y indicates a slot ty where the resource R(x, y) is located, and the resource R(x, y) indicates consecutive $L_{subchannel}$ subchannels in the slot from the subchannel x. $L_{subchannel}$ is configured by the high layer to the physical layer, and $(t_1, t_2, t_3...)$ is a set of slots belonging to a resource pool.

In some embodiments, the resource set A initialized by the terminal device does not include the resource R(x, y) satisfying the first condition, and an initial number of resources in the resource set A is $M_{total}$. The terminal device excludes resources in the resource set A based on the unmonitored slot and/or the sensing result within the resource sensing window.

In some embodiments, the resource set A initialized by the terminal device includes all resource R(x, y)s in the resource selection window, and an initial number of resources in the resource set A is $M_{total}$. The terminal device excludes resources R(x, y)s satisfying the first condition from the resource set A, and excludes resources in the resource set A based on the unmonitored slot and/or the sensing result within the resource sensing window.

As shown in FIG. 10, assuming that the resource pool used by the terminal device corresponds to two RB sets (that is, the "resource block set 1" and the "resource block set 2" in the drawing) in the frequency domain, the guard frequency band is configured between the two RB sets (that is, the "guard band 1" in the drawing), and the resource pool corresponds to nine subchannels in the frequency domain. In a case where $L_{subchannel}$ configured by the high layer is 2, FIG.10 shows eight candidate resources R(x, y)s corresponding to any slot ty belonging to the resource pool, and each resource R(x, y) corresponds to two subchannels in the frequency domain and a slot in the time domain, that is, resources R(1, y), R(2, y),... R(8, y).

In some embodiments, the first condition includes the condition 1. Since the frequency domain end positions of the resources R(3, y) and the R(4, y) are within the guard frequency band, and the frequency domain start positions of the resources R(5, y) and R(6, y) are within the guard frequency band, the resources R(3, y), R(4, y), R(5, y), and R(6, y) satisfy the first condition.

In some embodiments, the first condition includes the condition 1 and the condition 2. Since the frequency domain end positions of the resources R(3, y) and R(4, y) are within the guard frequency band, the frequency domain start positions of the resources R(5, y) and R(6, y) are within the guard frequency band, and the numbers of PRBs in the start subchannels, that is, the subchannel 4, the subchannel 5, the subchannel 6, of the resources R(4, y), R(5, y), and R(6, y) other than the guard frequency band are all less than the first threshold, and the number of PRBs in the start subchannel, that is, the subchannel 3, of the resource R(3, y) is greater than the first threshold, the resources R(4, y), R(5, y) and R(6, y) satisfy the first condition.

In some embodiments, the first condition includes the condition 1 and the condition 3. Since the frequency domain end positions of the resources R(3, y) and R(4, y) are within the guard frequency band, and the frequency domain start positions of the resources R(5, y) and R(6, y) are within the guard frequency band, the number of PRBs in the subchannel 3 of the resource R(3, y) other than the guard frequency band is greater than the second threshold, the numbers of PRBs in subchannels corresponding to the resource R(4, y) other than the guard frequency band are all less than the second threshold, the numbers of PRBs in subchannels corresponding to the resource R(5, y) other than the guard frequency band are all less than the second threshold, and the number of PRBs in the subchannel 7 of the resource R(6, y) other than the guard frequency band is greater than the second threshold. Therefore, the resources R(4, y) and R(5, y) satisfy the first condition.

In some embodiments, the first condition includes the condition 1 and the condition 4. Since the frequency domain end positions of the resources R(3, y) and R(4, y) are within the guard frequency band, and the frequency domain start positions of the resources R(5, y) and R(6, y) are within the guard frequency band, the numbers of PRBs other than the guard frequency band within the resources R(3, y) and R(6, y) are greater than the third threshold, the numbers of PRBs other than the guard frequency band within the resources R(4, y) and R(5, y) are less than the third threshold. Therefore, the resources R(4, y) and R(5, y) satisfy the first condition.

For exclusion based on the unmonitored slot and based on the resource sensing result, reference may be made to above description.

In a case where the remaining resources in resource set A upon resource exclusion are less than $M_{total}*X$, an SL-RSRP threshold is raised by 3dB, the resource set A is initialized, and the above process is performed again until the number of remaining resources in the resource set A upon resource exclusion is greater than or equal to $M_{total}*X$. The physical layer reports the resource set A upon resource exclusion to the high layer. The resource set A upon resource exclusion is referred to as a candidate resource set. The high layer randomly selects one or more candidate resources from the resource set reported by the physical layer as transmission resources. In some embodiments, X is configured by a high layer of the terminal device to the physical layer.

In some cases, above embodiments are applicable to an MCSt scenarios. For example, any candidate resource within the resource selection window is the resource R(x, y), and x and y are used to indicate the frequency domain position and the time domain position of the resource respectively. For example, x indicates the subchannel at the frequency domain start position of the resource R(x, y), y represents a start slot of the resource R(x, y), and the resource R(x, y) corresponds to consecutive $L_{slot}$ slots belonging to the resource pool from the slot ty in the time domain, and the resource R(x, y) corresponds to consecutive L_subchannel subchannels from the subchannel x in the frequency domain. L_subchannel and L_slot are configured by the high layer to the physical layer, and (t1, t2, t3...) is a set of slots belonging to a resource pool.

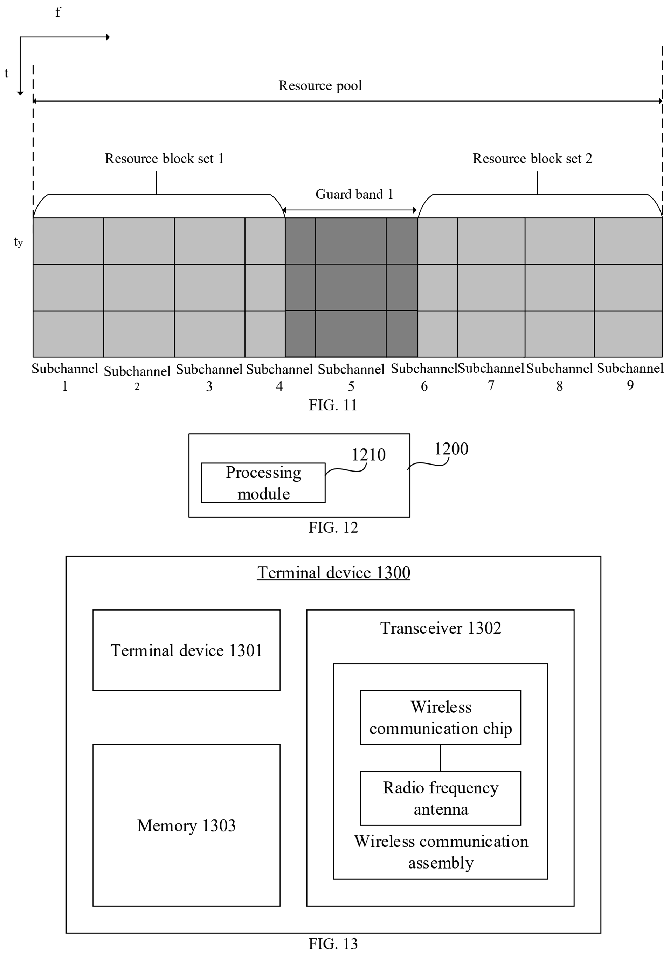

As shown in FIG. 11, assuming that the resource pool used by the terminal device corresponds to two RB sets (that is, the "resource block set 1" and the "resource block set 2" in the drawing) in the frequency domain, the guard frequency band is configured between the two RB sets (that is, the "guard band 1" in the drawing), and the resource pool corresponds to nine subchannels in the frequency domain. In a case where L_subchannel configured by the high layer is 2, and L_slot is 3, FIG. 11 shows eight candidate resources R(x, y)s corresponding to any slot ty belonging to the resource pool, and each resource R(x, y) corresponds to two subchannels in the frequency domain and a slot in the time domain and corresponds to three slots in the time domain, that is, resources R(1, y), R(2, y),... R(8, y). Thus, for the embodiments of single-slot candidate resources, the examples for determining whether the resource R(x, y) satisfies the first condition is applicable to the embodiments of multi-slot candidate resources.

The resource set A initialized by the terminal device does not include the resource R(x, y) satisfying the first condition. Alternatively, the resource set A initialized by the terminal device includes all resource R(x, y)s in the resource selection window, and resources R(x, y)s satisfying the first condition A are excluded from the resource set.

In some embodiments, the first condition includes the condition 1. Since the frequency domain end positions of the resources R(3, y) and the R(4, y) are within the guard frequency band, and the frequency domain start positions of the resources R(5, y) and R(6, y) are within the guard frequency band, the resources R(3, y), R(4, y), R(5, y), and R(6, y) satisfy the first condition.

In some embodiments, the first condition includes the condition 1 and the condition 2. Since the frequency domain end positions of the resources R(3, y) and R(4, y) are within the guard frequency band, the frequency domain start positions of the resources R(5, y) and R(6, y) are within the guard frequency band, and the numbers of PRBs in the start subchannels, that is, the subchannel 4, the subchannel 5, the subchannel 6, of the resources R(4, y), R(5, y), and R(6, y) other than the guard frequency band are all less than the first threshold, and the number of PRBs in the start subchannel, that is, the subchannel 3, of the resource R(3, y) is greater than the first threshold, the resources R(4, y), R(5, y) and R(6, y) satisfy the first condition.

In some embodiments, the first condition includes the condition 1 and the condition 3. Since the frequency domain end positions of the resources R(3, y) and R(4, y) are within the guard frequency band, and the frequency domain start positions of the resources R(5, y) and R(6, y) are within the guard frequency band, the number of PRBs in the subchannel 3 of the resource R(3, y) other than the guard frequency band is greater than the second threshold, the numbers of PRBs in subchannels corresponding to the resource R(4, y) other than the guard frequency band are all less than the second threshold, the numbers of PRBs in subchannels corresponding to the resource R(5, y) other than the guard frequency band are all less than the second threshold, and the number of PRBs in the subchannel 7 of the resource R(6, y) other than the guard frequency band is greater than the second threshold. Therefore, the resources R(4, y) and R(5, y) satisfy the first condition.

In some embodiments, the first condition includes the condition 1 and the condition 4. Since the frequency domain end positions of the resources R(3, y) and R(4, y) are within the guard frequency band, and the frequency domain start positions of the resources R(5, y) and R(6, y) are within the guard frequency band, the numbers of PRBs other than the guard frequency band within the resources R(3, y) and R(6, y) are greater than the third threshold, the numbers of PRBs other than the guard frequency band within the resources R(4, y) and R(5, y) are less than the third threshold. Therefore, the resources R(4, y) and R(5, y) satisfy the first condition.

In the technical solutions according to the embodiments of the present disclosure, the resource set determined by the terminal device does not include the candidate resource satisfying the first condition, and the first condition is associated with the guard frequency band, such that the determined resource set does not include a resource that cannot be used for transmission at an edge of the guard frequency band. As such, in a case where the terminal device selects a transmission resource from the resource set, the terminal device avoids selecting the resource that cannot be used for transmission at the edge of the guard frequency band to avoid transmission failure.

In addition, a determination condition is added at the initialized resource set or resource exclusion perspective, such that the terminal device selects the resource that cannot be used for transmission at the edge of the guard frequency band.

Hereinafter, some apparatus embodiments are described. The apparatus according to the apparatus embodiments may be employed to perform the method according to the above method embodiments of the present disclosure. For details that are not disclosed in the apparatus embodiments of the present disclosure, reference may be made to the method embodiments of the present disclosure.

Referring to FIG. 12, a block diagram of an apparatus for determining a resource set according to some embodiments of the present disclosure is illustrated. The apparatus has the function of implementing the method for resource reselection according to the above embodiments, and the function may be achieved by hardware or by hardware executing corresponding software. The apparatus may be the terminal device mentioned above or may be provided in the terminal device. As shown in FIG. 12, the apparatus 1200 includes: a processing module 1210.

The processing module 1210 is configured to determine a resource set, wherein the resource set does not include a candidate resource satisfying a first condition, wherein the first condition is associated with a guard frequency band.

In some embodiments, the first condition includes at least one of the following items:

a frequency domain start position or a frequency domain end position of the candidate resource is within the guard frequency band;

a number of PRBs other than the guard frequency band within a start subchannel of the candidate resource is less than or equal to a first threshold;

the candidate resource does not include a first subchannel, and a number of PRBs other than the guard frequency band within the first subchannel is greater than or equal to a second threshold; or

a number of PRBs other than the guard frequency band within the candidate resource is less than or equal to a third threshold.

In some embodiments, the frequency domain start position or the frequency domain end position of the candidate resource being within the guard frequency band means that:

the frequency domain start position or the frequency domain end position of the candidate resource is higher than or equal to a frequency domain start position of the guard frequency band, and is lower than or equal to a frequency domain end position of the guard frequency band; or

the frequency domain start position or the frequency domain end position of the candidate resource is higher than a frequency domain start position of the guard frequency band, and is lower than a frequency domain end position of the guard frequency band.

In some embodiments, the processing module 1210 is configured to:

initialize the resource set to acquire an initialized resource set, wherein the initialized resource set includes remaining candidate resources other than the candidate resource satisfying the first condition within a resource selection window; and

exclude candidate resources in the resource set based on an unmonitored time unit and/or a sensing result within a resource sensing window.

In some embodiments, the processing module 1210 is configured to:

initialize the resource set to acquire an initialized resource set, wherein the initialized resource set includes all candidate resources within a resource selection window; and

exclude the candidate resource satisfying the first condition from the resource set, and exclude candidate resources in the resource set based on an unmonitored time unit and/or a sensing result within a resource sensing window.

In some embodiments, the candidate resource corresponds to a subchannel or a plurality of consecutive subchannels in a frequency domain.

In some embodiments, the candidate resource corresponds to a time unit or a plurality of consecutive time units in a time domain.

In some embodiments, the terminal device includes a physical layer and a high layer, wherein

the physical layer is configured to determine the resource set and report the resource set to the high layer; and

the high layer is configured to select a transmission resource from the resource set.

It should be noted that, in a case where the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific manner in which each module performs the operation has been described in detail in the embodiments related to the method and will not be described in detail herein. Reference may be made to the above method embodiments for details that are not specified in the apparatus embodiment.

Referring to FIG. 13, a schematic structural diagram of a terminal device according to some embodiments of the present disclosure is illustrated. The terminal device 1300 includes: a processor 1301, a transceiver 1302, and a memory 1303.

The processor 1301 includes one or more processing cores, and the processor 1301 runs various functional applications and performs information processing by running software programs and modules.

The transceiver 1302 includes a receiver and a transmitter, which are practiced, for example, as the same wireless communication assembly that includes a wireless communication chip and a radio frequency antenna.

The memory 1303 is connected to the processor 1301 and the transceiver 1302.

The memory 1303 may be configured to store one or more computer programs run by the processor, and the processor 1301 is configured to run the one or more computer programs to perform the processes in the above method embodiments.

In some embodiments, the processor 1301 is configured to determine a resource set, wherein the resource set does not include a candidate resource satisfying a first condition, wherein the first condition is associated with a guard frequency band.

For details not specified in the embodiments, reference is made to the foregoing embodiments, which are not repeated herein.

In addition, the memory may be implemented by any type or combination of volatile or non-volatile storage devices, including, but not limited to: a magnetic or optical disc, an electrically erasable programmable read-only memory, an erasable programmable read-only memory, a static random-access memory, a read-only memory (ROM), a magnetic memory, a flash memory, and a programmable read-only memory.

The embodiments of the present disclosure further provide a computer-readable storage medium storing one or more computer programs therein. The one or more computer programs, when loaded and run by a processor, cause the processor to perform the method for resource reselection described above. In some embodiments, the computer-readable storage medium includes: a ROM, a random-access memory (RAM), a solid state drive (SSD), an optical disk, etc. The RAM includes a resistance random-access memory (ReRAM) and a dynamic random access memory (DRAM).

The embodiments of the present disclosure further provide a chip including one or more programmable logic circuits and/or one or more program instructions. The chip, when running, is caused to perform the method for resource reselection described above.

The embodiments of the present disclosure further provide a computer program product or a computer program. The computer program product or the computer program includes computer instructions stored in a computer-readable storage medium. The computer instructions, when read from the computer-readable storage medium and executed by a processor, cause the processor to perform the method for resource reselection described above.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items; and also indicates relationships such as indicating and being indicated, or configuring and being configured.

In some embodiments of the present disclosure, the term "predefined" is implemented by pre-storing corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Reference herein to "greater than or equal to" may indicate greater than or equal to or just greater than, and "less than or equal to" may indicate less than or equal to or just less than.

In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for determining a resource set, applicable to a terminal device, the method comprising:
   determining a resource set, wherein the resource set does not comprise a candidate resource satisfying a first condition, wherein the first condition is associated with a guard frequency band.

2. The method according to claim 1, wherein the first condition comprises at least one of the following items:

   a frequency domain start position or a frequency domain end position of the candidate resource is within the guard frequency band;
   a number of physical resource blocks (PRBs) other than the guard frequency band within a start subchannel of the candidate resource is less than or equal to a first threshold;
   the candidate resource does not comprise a first subchannel, and a number of PRBs other than the guard frequency band within the first subchannel is greater than or equal to a second threshold; or
   a number of PRBs other than the guard frequency band within the candidate resource is less than or equal to a third threshold.

3. The method according to claim 2, wherein the frequency domain start position or the frequency domain end position of the candidate resource being within the guard frequency band means that:

   the frequency domain start position or the frequency domain end position of the candidate resource is higher than or equal to a frequency domain start position of the guard frequency band, and is lower than or equal to a frequency domain end position of the guard frequency band; or
   the frequency domain start position or the frequency domain end position of the candidate resource is higher than a frequency domain start position of the guard frequency band, and is lower than a frequency domain end position of the guard frequency band.

4. The method according to any one of claims 1 to 3, wherein determining the resource set comprises:

   initializing the resource set to acquire an initialized resource set, wherein the initialized resource set comprises remaining candidate resources other than the candidate resource satisfying the first condition within a resource selection window; and
   excluding candidate resources in the resource set based on an unmonitored time unit and/or a sensing result within a resource sensing window.

5. The method according to any one of claims 1 to 3, wherein determining the resource set comprises:

   initializing the resource set to acquire an initialized resource set, wherein the initialized resource set comprises all candidate resources within a resource selection window; and
   excluding the candidate resource satisfying the first condition from the resource set, and excluding candidate resources in the resource set based on an unmonitored time unit and/or a sensing result within a resource sensing window.

6. The method according to any one of claims 1 to 5, wherein the candidate resource corresponds to a subchannel or a plurality of consecutive subchannels in a frequency domain.

7. The method according to any one of claims 1 to 6, wherein the candidate resource corresponds to a time unit or a plurality of consecutive time units in a time domain.

8. The method according to any one of claims 1 to 7, wherein the terminal device comprises a physical layer and a high layer; wherein

the physical layer is configured to determine the resource set and report the resource set to the high layer; and the high layer is configured to select a transmission resource from the resource set.

9. An apparatus for determining a resource set, comprising:

a processing module, configured to determine a resource set, wherein the resource set does not comprise a candidate resource satisfying a first condition, wherein the first condition is associated with a guard frequency band.

10. The apparatus according to claim 9, wherein the first condition comprises at least one of the following items:

a frequency domain start position or a frequency domain end position of the candidate resource is within the guard frequency band;

a number of physical resource blocks (PRBs) other than the guard frequency band within a start subchannel of the candidate resource is less than or equal to a first threshold;

the candidate resource does not comprise a first subchannel, and a number of PRBs other than the guard frequency band within the first subchannel is greater than or equal to a second threshold; or

a number of PRBs other than the guard frequency band within the candidate resource is less than or equal to a third threshold.

11. The apparatus according to claim 10, wherein the frequency domain start position or the frequency domain end position of the candidate resource being within the guard frequency band means that:

the frequency domain start position or the frequency domain end position of the candidate resource is higher than or equal to a frequency domain start position of the guard frequency band, and is lower than or equal to a frequency domain end position of the guard frequency band; or

the frequency domain start position or the frequency domain end position of the candidate resource is higher than a frequency domain start position of the guard frequency band, and is lower than a frequency domain end position of the guard frequency band.

12. The apparatus according to any one of claims 9 to 11, wherein the processing module is configured to:

initialize the resource set to acquire an initialized resource set, wherein an initialized resource set comprises remaining candidate resources other than the candidate resource satisfying the first condition within a resource selection window; and

exclude candidate resources in the resource set based on an unmonitored time unit and/or a sensing result within a resource sensing window.

13. The apparatus according to any one of claims 9 to 11, wherein the processing module is configured to:

initialize the resource set to acquire an initialized resource set, wherein an initialized resource set comprises all candidate resources within a resource selection window; and

exclude the candidate resource satisfying the first condition from the resource set, and exclude candidate resources in the resource set based on an unmonitored time unit and/or a sensing result within a resource sensing window.

14. The apparatus according to any one of claims 9 to 13, wherein the candidate resource corresponds to a subchannel or a plurality of consecutive subchannels in a frequency domain.

15. The apparatus according to any one of claims 9 to 14, wherein the candidate resource corresponds to a time unit or a plurality of consecutive time units in a time domain.

16. The apparatus according to any one of claims 9 to 15, wherein the terminal device comprises a physical layer and a high layer; wherein

the physical layer is configured to determine the resource set and report the resource set to the high layer; and the high layer is configured to select a transmission resource from the resource set.

17. A terminal device, comprising: a processor and a memory storing one or more computer programs, which when run by the processor, cause the processor to perform the method as defined in any one of claims 1 to 8.

18. A computer-readable storage medium, storing one or more computer programs, which when run by the processor, cause the processor to perform the method as defined in any one of claims 1 to 8.

19. A chip, comprising: one or more programmable logic circuits and/or one or more program instructions, wherein the chip, when running, is caused to perform the method as defined in any one of claims 1 to 8.

20. A computer program product, comprising: one or more computer instructions stored in a computer-readable storage medium, wherein the one or more computer instructions, when read from the computer-readable storage medium and executed by a processor, cause the processor to perform the method as defined in any one of claims 1 to 8.

FIG. 1

AGC for receiving the
PSFCH

FIG. 2

PSSCH          PSCCH

TB1

Initial transmission    Retransmission 1   Retransmission 2

TB2

Initial transmission    Retransmission 1   Retransmission 2

FIG. 3

(a)

20                                                    10

R(x,y)

$n-T_0$          $t_m$    n    $n+T_1$                    $n+T_2$          t

(b)          20                                    10

E(v,m)   1        2    3        4    5    6

R(x,y)

$n-T_0$        z        $t_m$    n   $n+T_1$        $t_{m+Prxlg}$        $n+T_2$       t

FIG. 4

| 0 | 1 | 2 | 3 | 4 | 0 | 1 | 2 | 3 | 4 | 0 | 1 | 2 | 3 | 4 | 0 | 1 | 2 | 3 | 4 |

0   1   2   3   4   5   6   7   8   9   10  11  12  13  14  15  16  17  18  19

$f$ (RB)

Interlace 0        Interlace 1

FIG. 5

FIG. 6

FIG. 7

Determining, by a terminal device, a resource set, wherein the resource set does not include a candidate resource satisfying a first condition, wherein the first condition is associated with a guard frequency band

810

FIG. 8

20

10

R(x,y)

n-T$_0$

n-T$_{proc,0}$

n

n+T$_1$

n+T$_2$

t

FIG. 9

f

t

Resource pool

Resource block set 1

Resource block set 2

Guard band 1

ty

Subchannel 1

Subchannel 2

Subchannel 3

Subchannel 4

Subchannel 5

Subchannel 6

Subchanne l 7

Subchannel 8

Subchannel 9

FIG. 10

FIG. 11

FIG. 12

FIG. 13

## INTERNATIONAL SEARCH REPORT

| International application No. |
|---|
| **PCT/CN2023/086272** |

**A.     CLASSIFICATION OF SUBJECT MATTER**

H04W72/02(2009.01)i

According to International Patent Classification (IPC) or to both national classification and IPC

**B.     FIELDS SEARCHED**

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, 3GPP: 资源, 排除, 保护频带, 保护带, 保护间隔, resource, guardband, guard band, exclude+, exclusi+

**C.     DOCUMENTS CONSIDERED TO BE RELEVANT**

| Category* | Citation of document, with indication, where appropriate, of the relevant passages | Relevant to claim No. |
|---|---|---|
| X | WO 2022073183 A1 (QUALCOMM INC.) 14 April 2022 (2022-04-14)<br>description, paragraphs 68-98 and 116, and figures 1 and 5-14 | 1-20 |
| X | US 2022231822 A1 (OROPE FRANCE SARL) 21 July 2022 (2022-07-21)<br>description, paragraphs 13 and 68-70 | 1-20 |
| X | WO 2022214071 A1 (VIVO MOBILE COMMUNICATION CO., LTD.) 13 October 2022 (2022-10-13)<br>description, paragraphs 109-120 | 1-20 |
| A | CN 114467275 A (IDAC HOLDINGS, INC.) 10 May 2022 (2022-05-10)<br>entire document | 1-20 |
| A | US 2022061094 A1 (ELECTRONICS & TELECOMMUNICATIONS RESEARCH INSTITUTE) 24 February 2022 (2022-02-24)<br>entire document | 1-20 |
| A | HUAWEI et al. "Physical channel design for sidelink operation over unlicensed spectrum"<br>*3GPP TSG-RAN WG1 Meeting #112, R1-2300125*, 03 March 2023 (2023-03-03),<br>entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 December 2023** | **08 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/086272**

| Patent document cited in search report | | | Publication date (day/month/year) | Patent family member(s) | | | Publication date (day/month/year) |
|---|---|---|---|---|---|---|---|
| WO | 2022073183 | A1 | 14 April 2022 | US | 2023269730 | A1 | 24 August 2023 |
| | | | | EP | 4226709 | A1 | 16 August 2023 |
| | | | | IN | 202347007722 | A | 24 February 2023 |
| | | | | CN | 116326038 | A | 23 June 2023 |
| US | 2022231822 | A1 | 21 July 2022 | EP | 4029182 | A1 | 20 July 2022 |
| | | | | WO | 2021069947 | A1 | 15 April 2021 |
| | | | | CN | 114514716 | A | 17 May 2022 |
| WO | 2022214071 | A1 | 13 October 2022 | CN | 115208526 | A | 18 October 2022 |
| CN | 114467275 | A | 10 May 2022 | EP | 4038938 | A1 | 10 August 2022 |
| | | | | KR | 20220073782 | A | 03 June 2022 |
| | | | | WO | 2021067391 | A1 | 08 April 2021 |
| | | | | US | 2022407663 | A1 | 22 December 2022 |
| | | | | BR | 112022006402 | A2 | 28 June 2022 |
| | | | | IN | 202217013495 | A | 01 July 2022 |
| | | | | VN | 89358 | A | 26 September 2022 |
| US | 2022061094 | A1 | 24 February 2022 | WO | 2020171478 | A1 | 27 August 2020 |
| | | | | KR | 20200102926 | A | 01 September 2020 |
| | | | | CN | 113261366 | A | 13 August 2021 |

Form PCT/ISA/210 (patent family annex) (July 2022)